# EUROPEAN PATENT SPECIFICATION

(11) **EP 1 680 638 B1**
(45) Date of publication and mention of the grant of the patent: **26.11.2008**
(21) Application number: 03751542.6
(22) Date of filing: 14.10.2003
(51) Int. Cl.: F28D 9/00, F24F 12/00

(54) **HEAT EXCHANGER FOR VENTILATOR**
WÄRMETAUSCHER FÜR VENTILATOR
ECHANGEUR DE CHALEUR POUR VENTILATEUR

(43) Date of publication of application: 19.07.2006
(73) Proprietor: LG Electronics, Inc., Seoul 150-010 (KR)
(72) Inventor: SHIN, Soo-Yeon, Myeon, Gimha-shi, 621-833 Kyungsangnam-do (KR); CHO, Min-Chul, 616-830 Busan (KR); LEE, Seonghwan, Changwon-Shi, 641-091 Kyungsangnam-Do (KR); LEE, Sung-Hwa, Changwon-Shi, 641-010 Kyungsangnam-Do (KR); KANG, Tae-Wook, Myeon, Gimhae-Shi, 621-831 Kyungsangnam-do (KR); KANG, Gwang-Og, Changwon-Shi, 641-550 Kyungsangnam-Do (KR); SONG, Chang-Hyun, Sasang-Ku, 617-020 Busan (KR); LEE, Ho-Beom, Yeonje-Ku, 611-072 Busan (KR); LEE, Kam-Gyu, Busanjin-Ku, 614-113 Busan (KR)
(74) Representative: Wunderlich, Rainer
(86) International application number: PCT/KR2003/002126
(87) International publication number: WO 2005/036084

(56) References cited:
- JP-A- 8 121 986
- JP-A- 2000 146 467

## Description

### TECHNICAL FIELD

The present invention relates to a heat exchanger for a ventilator according to the preamble of claims 1 and 16. Such a heat exchanger can be built in the ventilator for externally discharging indoor air and internally sucking outdoor air, for exchanging heat between indoor air and outdoor air.

### BACKGROUND ART

In general, the carbon dioxide content of air increases in a hermetically sealed space with the passage of time because of breathing of living objects, and has detrimental affects on breathing. Accordingly, a ventilator is used to exchange contaminated indoor air for fresh outdoor air especially in a narrow space where a number of people stay such as an office or vehicle.

The ventilator includes an air blower for forcibly blowing indoor air and outdoor air, and repeats a process of externally discharging contaminated indoor air and internally sucking fresh outdoor air.

However, when cooling and ventilating operations are performed indoors at the same time, cooled indoor air is exhausted and hot outdoor air is sucked. Thus, a temperature of indoor air is higher than a cooling temperature, to reduce cooling efficiency. In the case that heating and ventilating operations are simultaneously performed indoors, heated indoor air is exhausted and cooled outdoor air is sucked. As a result, the temperature of indoor air is lower than a heating temperature, to reduce heating efficiency.

Accordingly, the ventilator further includes a heat exchanger for exchanging heat between indoor air and outdoor air.

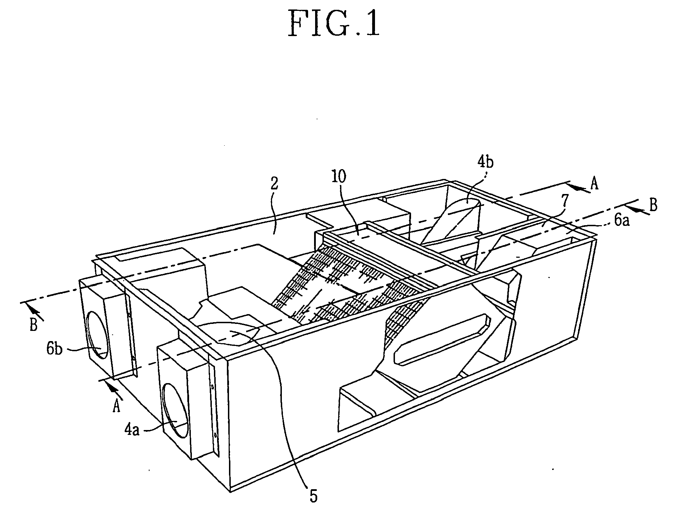

In detail, a general ventilator will now be explained with reference to Fig. 1. The ventilator is comprised of a casing 2 forming the external appearance, a heat exchanger 10 installed in the casing 2, for separately flowing indoor air and outdoor air, and exchanging heat between indoor air and outdoor air, an outdoor air suction hole 4a and an outdoor air discharge hole 4b formed respectively on the facing surfaces of the casing 2, for sucking and discharging outdoor air, an indoor air suction hole 6a and an indoor air discharge hole 6b formed respectively at one side surfaces of the outdoor air suction hole 4a and the outdoor air discharge hole 4b, for sucking and discharging indoor air, an air supply fan 8 installed inside the outdoor air discharge hole 4b for internally sucking outdoor air, an air exhaust fan 9 installed inside the indoor air discharge hole 6b for externally discharging outdoor air, and a free filter (not shown) installed inside the outdoor air suction hole 4a for removing alien substances of outdoor air such as dust.

Here, an outdoor air passage guide 5 is formed between the outdoor air suction hole 4a and the outdoor air discharge hole 4b, so that outdoor air sucked through the outdoor air suction hole 4a can be discharged to the outdoor air discharge hole 4b through the heat exchanger 10, an indoor air passage guide 7 is formed between the indoor air suction hole 6a and the indoor air discharge hole 6b, so that indoor air sucked through the indoor air suction hole 6a can be discharged to the indoor air discharge hole 6b through the heat exchanger 10, the outdoor air suction hole 4 a and the indoor air discharge hole 6 b are connected to outdoor ducts (now shown) linked to the outdoor side, and the outdoor air discharge hole 4b and the indoor air suction hole 6a are connected to indoor ducts (not shown) linked to the indoor side.

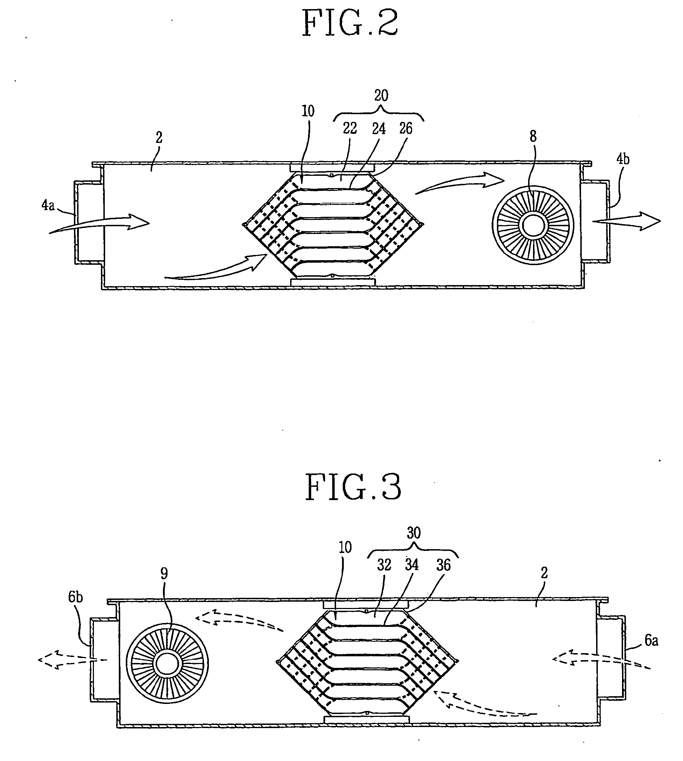

Accordingly, when the air supply fan 8 and the air exhaust fan 9 are operated, as shown in Fig. 2, outdoor air is internally sucked through the outdoor air suction hole 4a, the heat exchanger 10, the air supply fan 8 and the outdoor air discharge hole 4b, and as shown in Fig. 3, indoor air is externally discharged through the indoor air suction hole 6a, the heat exchanger 10, the air exhaust fan 9 and the indoor air discharge hole 6b. The indoor air and outdoor air flow in the heat exchanger 10 in the facing directions, to exchange heat.

In the heat exchanger 10, a plurality of heat exchange units 20 and 30 are stacked to separately flow indoor air and outdoor air, for forming crossing passages A for guiding indoor air and outdoor air to flow in the crossing directions, and facing passages B for guiding indoor air and outdoor air to flow in the facing directions.

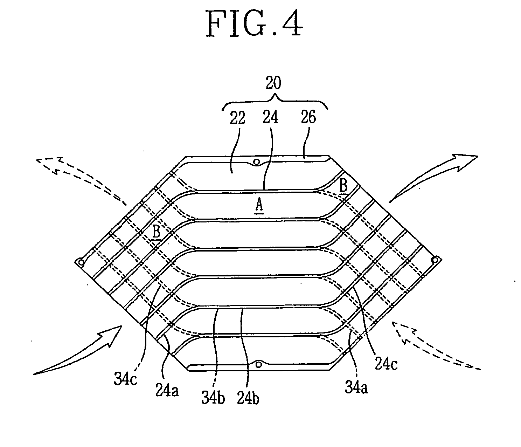

In detail, as illustrated in Fig. 4, in the heat exchange units 20 and 30, frames 26 and 36 having a plurality of guide ribs 24 and 34 are adhered to one side surfaces of heat exchange films 22 and 32. The heat exchange films 22 and 32 are formed in the hexagonal shape, center units 24b and 34b of the guide ribs 24 and 34 are formed in the straight line shape to be level with one side facing ends of the heat exchange films 22 and 32, and both end units 24a, 24c, 34a and 34c of the guide ribs 24 and 34 are formed in the straight line shape to be level with the other side facing ends of the heat exchange films 22 and 32. The guide ribs 24 and 34 are installed in parallel to the adjacent guide ribs 24 and 34 at regular intervals.

Here, the plurality of guide ribs 24 and 34 are installed on one side surfaces of the hexagonal heat exchange films 22 and 32 to cross them from one side ends to the other side ends. Therefore, the length of the center units 24b and 34b of the guide ribs 24 and 34 is constant, but the length of the both end units 24a, 24c, 34a and 34c gradually increases or decreases.

The heat exchange units 20 and 30 are divided into first and second heat exchange units 20 and 30 according to the shape of the both end units 24a, 24c, 34a and 34c of the guide ribs 24 and 34. Inlets and outlets of the first and second heat exchange units 20 and 30 do not overlap with each other in order to form passages for separately flowing outdoor air and indoor air along the first and second heat exchange units 20 and 30.

In the first and second heat exchange units 20 and 30, the center units 24b and 34b of the guide ribs 24 and 34 are level with each other to form the facing passages A, and the both end units 24a, 24c, 34a and 34c of the guide ribs 24 and 34 are perpendicular to each other to form the crossing passages B.

Accordingly, outdoor air and indoor air are respectively sucked toward the first and second heat exchange units 20 and 30, and guided by the guide ribs 24 and 34, so that they can perpendicularly cross each other in the crossing passages B and face each other in the facing passages A, to exchange heat.

Especially, there is a big relative speed difference between indoor air and outdoor air passing through the facing passages A, and thus the heat exchanging operation is most active in the facing passages A.

In relation to this, as disclosed in Japanese Laid-Open Patent Application 08-75385 (March 19, 1996), S-shaped curved ribs are installed on hexagonal heat exchange films to form facing passages and crossing passages, so that supplied air and exhausted air can pass through the facing passages and the crossing passages to exchange heat, and as revealed by Japanese Laid-Open Patent Application 05-34089 (February 9, 1993), a plurality of curved rib groups are fixedly installed on one side surfaces of paper liners to form crossing passages at both ends. and facing passages in the center units, so that two fluids can pass through the facing passages and the crossing passages to exchange heat.

In the general heat exchanger for the ventilator, the plurality of guide ribs are installed on one side surfaces of the heat exchange films to cross them from one side ends to the other side ends. Here, the guide ribs are densely arranged on the heat exchange films to increase the time taken to perform the heat exchange operation between indoor air and outdoor air.

Therefore, indoor air and outdoor air are guided to run against the curved guide ribs. The guide ribs densely installed on the heat exchange films are operated as flow resistances of indoor air and outdoor air, to increase load of the air supply fan or air exhaust fan for blowing indoor air and outdoor air. In addition, high flow resistances increase pressure loss of indoor air and outdoor air, and thus interrupt blowing of indoor air and outdoor air, which results in low heat exchange efficiency.

A heat exchanger according to the preamble of claims 1 and 16 is disclosed in JP-A-8121986. JP-A-8121986 describes a heat exchanging element having spacer ribs provided with linear ends and a central corrugation shape.

JP-A-2000146467 discloses a heat exchanger wherein a large number of rectangular partition members with heat transfer characteristic and moisture permeability are laminated. An introduction passage and a discharge passage are alternately formed across each partition member. Openings are formed on each long edge side of the partition member. A division wall is provided on each passage, and an internal flow passage leading from an inlet to an outlet is formed. A translation part extending from the openings along a short edge of the partition member and a crossing part extending along the long edge of the partition member are provided on the division wall. An arc-like extending part and a tangential part extending from the arc-like extending part are provided between the translation part and the crossing part.

### DISCLOSURE OF THE INVENTION

An object of the present invention is to provide a heat exchanger for a ventilator which can maintain heat exchange efficiency and minimize pressure loss of supplied air and exhausted air, by improving a plurality of guide rib structures installed on heat exchange films.

In order to achieve the above-described object of the invention, there is provided a heat exchanger for a ventilator having the features of claims 1 or 16.

According to claim 1, a heat exchanger according to the preamble is characterized in that the plurality of guide ribs comprise first guide ribs having suction units and center units only, and second guide ribs having center units and discharge units only.

According to claim 16, a heat exchanger according to the preamble is characterized in that the plurality of guide ribs comprise main guide ribs having suction units, center units and discharge units, and auxiliary guide ribs having suction units and discharge units only.

According to the invention, there is provided a heat exchanger for a ventilator including first and second heat exchange units having a plurality of guide ribs on one side surfaces of heat exchange films, for separately flowing supplied air and exhausted air, the first and second heat exchange units being stacked to form crossing passages at their both ends and facing passages between the crossing passages, for exchanging heat between supplied air and exhausted air, guide ribs crossing the heat exchange films from one side ends to the other side ends being partially omitted in each of the first and second heat exchange units.

According to one aspect of the invention, the heat exchange films are formed in the hexagonal shape, the center units of the guide ribs forming the facing passages are level with one side facing ends of the heat exchange films, and suction units and discharge units of the guide ribs are level with the other side facing ends of the heat exchange films and compose suction crossing passages for sucking supplied air and discharge crossing passages for discharging exhausted air.

According to yet another aspect of the invention, the plurality of guide ribs include first guide ribs having suction units and center units, and second guide ribs having center units and discharge units.

It is, in principle, possible that the first guide ribs further include discharge guide units connected to one side surfaces of the center units for guiding discharge directions of supplied air or exhausted air, or the second guide ribs further include suction guide units connected to one side surfaces of the center units for guiding suction directions of supplied air or exhausted air.

According to yet another aspect of the invention, the center units of the first and second guide ribs are partially omitted, and the center units of the first guide ribs and the center units of the second guide ribs do not overlap with each other.

The first guide ribs further include discharge guide units installed on the extended lines of the center units for guiding discharging of supplied air or exhausted air to the ends of the heat exchange films, or the second guide ribs further include suction guide units installed on the extended lines of the center units for guiding suction of supplied air or exhausted air to the ends of the heat exchange films, and the discharge guide units and the suction guide units are partially omitted in length.

On the other hand, in the first and second guide ribs, the suction units and center units and the center units and discharge units are connected smoothly to reduce flow resistances.

According to yet another aspect of the invention, the center units of the first and second guide ribs are lengthened in the centers of the heat exchange films. The center units of the first and second guide ribs are gradually lengthened toward the centers of the heat exchange films, and assumed curved lines connecting the ends of the center units have a predetermined radius of curvature.

According to yet another aspect of the invention, at least one first guide rib and at least one second guide rib are alternately installed on the heat exchange films in one direction at regular intervals.

According to yet another aspect of the invention, a plurality of first guide ribs are installed in one direction at regular intervals in an area where the suction crossing passages are shorter than the discharge crossing passages, and a plurality of second guide ribs are installed in one direction at regular intervals in an area where the discharge crossing passages are shorter than the suction crossing passages.

In the centers of the heat exchange films, the first guide ribs are installed in an area where the discharge crossing passages are shorter than the suction crossing passages, and the second guide ribs are installed in an area where the suction crossing passages are shorter than the discharge crossing passages.

On the other hand, the plurality of guide ribs include main guide ribs having suction units, center units and discharge units, and auxiliary guide ribs having suction units and discharge units.

Here, the center units of the main guide ribs are partially omitted in length.

According to yet another aspect of the invention, in the main guide ribs, the suction units and center units and the center units and discharge units are connected smoothly to reduce flow resistances. At least one main guide rib and at least one auxiliary guide rib are alternately installed on the heat exchange films in one direction at regular intervals, and the first and second heat exchange units are stacked so that the main guide ribs of the first heat exchange unit and the main guide ribs of the second heat exchange unit cannot overlap with each other.

### BRIEF DESCRIPTION OF THE DRAWINGS

The present invention will become better understood with reference to the accompanying drawings which are given only by way of illustration and thus are not limitative of the present invention, wherein:
Fig. 1 is a perspective view illustrating an inside structure of a general ventilator;
Fig. 2 is a cross-sectional view taken along line A-A of Fig. 1;
Fig. 3 is a cross-sectional view taken along line B-B of Fig. 1;
Fig. 4 is a view illustrating air flowing in a heat exchanger for the ventilator;
Figs. 5 and 6 are a perspective view illustrating a heat exchanger for a ventilator and a view illustrating air flowing in the heat exchanger for the ventilator in accordance with a first embodiment of the present invention;
Figs. 7 and 8 are a-perspective view illustrating a heat exchanger for a ventilator and a view illustrating air flowing in the heat exchanger for the ventilator in accordance with a second embodiment of the present invention;
Figs. 9 and 10 are a perspective view illustrating a heat exchanger for a ventilator and a view illustrating air flowing in the heat exchanger for the ventilator in accordance with a third embodiment of the present invention;
Figs. 11 and 12 are a perspective view illustrating a heat exchanger for a ventilator and a view illustrating air flowing in the heat exchanger for the ventilator in accordance with a fourth embodiment of the present invention;
Figs. 13 and 14 are a perspective view illustrating a heat exchanger for a ventilator and a view illustrating air flowing in the heat exchanger for the ventilator in accordance with a fifth embodiment of the present invention;
Figs. 15 and 16 are a perspective view illustrating a heat exchanger for a ventilator and a view illustrating air flowing in the heat exchanger for the ventilator in accordance with a sixth embodiment of the present invention;
Figs. 17 and 18 are a perspective view illustrating a heat exchanger for a ventilator and a view illustrating air flowing in the heat exchanger for the ventilator in accordance with a seventh embodiment of the present invention; and
Figs. 19 and 20 are a perspective view illustrating a heat exchanger for a ventilator and a view illustrating air flowing in the heat exchanger for the ventilator in accordance with an eighth embodiment of the present invention.

### BEST MODE FOR CARRYING OUT THE INVENTION

A heat exchanger for a ventilator in accordance with the present invention will now be described in detail with reference to the accompanying drawings.

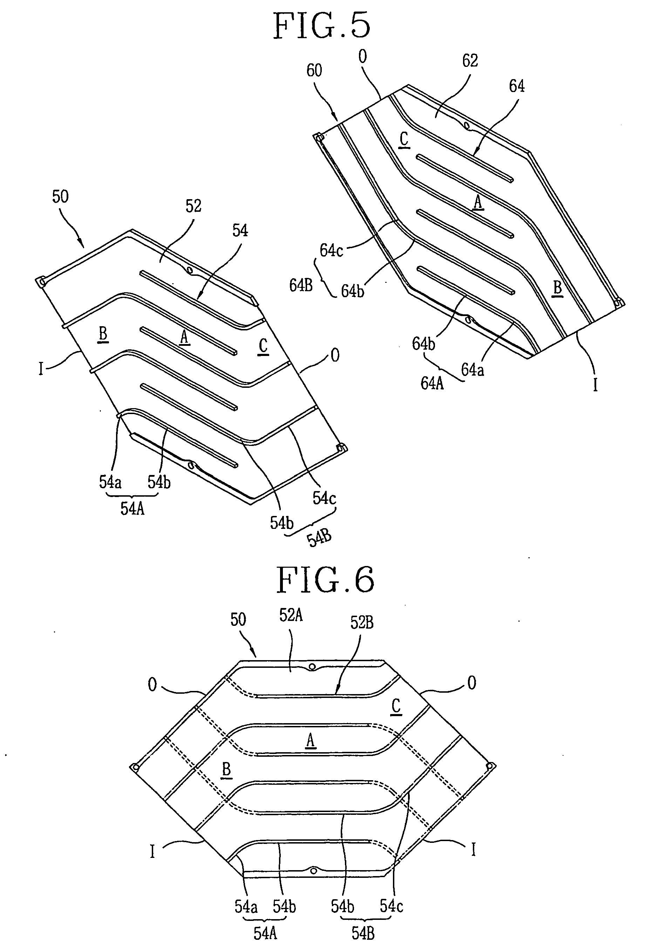

Figs. 5 and 6 are a perspective view illustrating a heat exchanger for a ventilator and a view illustrating air flowing in the heat exchanger for the ventilator in accordance with a first embodiment of the present invention.

Referring to Figs. 5 and 6, the heat exchanger for the ventilator includes a first heat exchange unit 50 having passages for guiding flowing of outdoor air, and a second heat exchange unit 60 having passages for guiding flowing of indoor air. In the first and second heat exchange units 50 and 60, a plurality of guide ribs 54 and 64 are formed on one side surfaces of heat exchange films 52 and 62. The first and second heat exchange units 50 and 60 are stacked so that an inlet I and outlet O of the first heat exchange u nit 5 0 for sucking/discharging outdoor a ir cannot overlap with an inlet I and outlet O of the second heat exchange unit 60 for sucking/discharging indoor air.

In addition, the first and second heat exchange units 50 and 60 are stacked to form facing passages A for flowing outdoor air and indoor air in facing directions and crossing passages B and C for flowing outdoor air and indoor air in crossing directions. The crossing passages B and C are divided into suction crossing passages B forming an outdoor air suction area in the first heat exchange unit 50 and an indoor air suction area in the second heat exchange unit 60, and discharge crossing passages C forming an outdoor air discharge area in the first heat exchange unit 50 and an indoor air discharge area in the second heat exchange unit 60.

Here, the plurality of guide ribs 54 and 64 are formed on the heat exchange films 52 and 62 to cross them from one side ends to the other side ends, and may be partially omitted to reduce flow resistances.

In detail, the heat exchange films 52 and 62 are formed in the hexagonal shape, and the plurality of guide ribs 54 and 64 are curved to lengthen passages for flowing outdoor air or indoor air. The plurality of guide ribs 54 and 64 include first guide ribs 54A and 64A having suction units 54a and 64a forming the suction crossing passages B and center units 54b and 64b forming the facing passages A, and second guide ribs 54B and 64B having center units 54b and 64b and discharge units 54c and 64c forming the discharge crossing passages C.

The center units 54b and 64b are level with one side facing ends of the heat exchange films 52 and 62, and the suction units 54a and 64a and the discharge units 54c and 64c are level with the other side facing ends of the heat exchange films 52 and 62. The suction units 54a and 64a and the discharge units 54c and 64c have the same outdoor air or indoor air suction and discharge directions.

Moreover, the suction units 54a and 64a and the center units 54b and 64b of the first guide ribs 54A and 64A are connected smoothly to reduce flow resistances when the outdoor air or indoor air suction directions are changed, and the center units 54b and 64b and the discharge units 54c and 64c of the second guide ribs 54B and 64B are connected smoothly to reduce flow resistances when the outdoor air or indoor air discharge directions are changed.

One or more first and second guide ribs 54A, 54B, 64A and 64B are alternately formed on the heat exchange films 52 and 62 in the vertical center line direction at regular intervals, and the first and second heat exchange units 50 and 60 are stacked so that the center units 54b and 64b of the first and second guide ribs 54A, 54B, 64A and 64B can overlap with each other.

The operation of the heat exchanger for the ventilator in accordance with the first embodiment of the present invention will now be described. Outdoor air flows along the first heat exchange unit 50, and indoor air flows along the second heat exchange unit 60, to exchange heat in the suction crossing passages B, the facing passages A and the discharge crossing passages C.

Here, outdoor air and indoor air flow in the crossing directions in the suction crossing passages B and the discharge crossing passages C to exchange heat, and flow in the facing directions in the facing passages A to exchange heat. Especially, the heat exchange operation is actively performed in the facing passages A showing a higher relative flowing speed between outdoor air and indoor air.

Because the suction units 54a and 64a of the first guide ribs 54A and 64A and the discharge units 54c and 64c of the second guide ribs 54B and 64B are alternately formed in the suction crossing passages B and the discharge crossing passages C, flowing resistances are reduced to lower load of an air blowing fan for blowing outdoor air or indoor air and pressure loss of outdoor air or indoor air, thereby improving air flow.

In addition, the center units 54b and 64b of the first and second guide ribs 54A, 54B, 64A and 64B are relatively densely formed in the facing passages A, and thus outdoor air and indoor air are evenly spread. Accordingly, heat exchange efficiency can be improved by increasing the time taken to pass through the facing passages A in which the heat exchange operation is most actively performed.

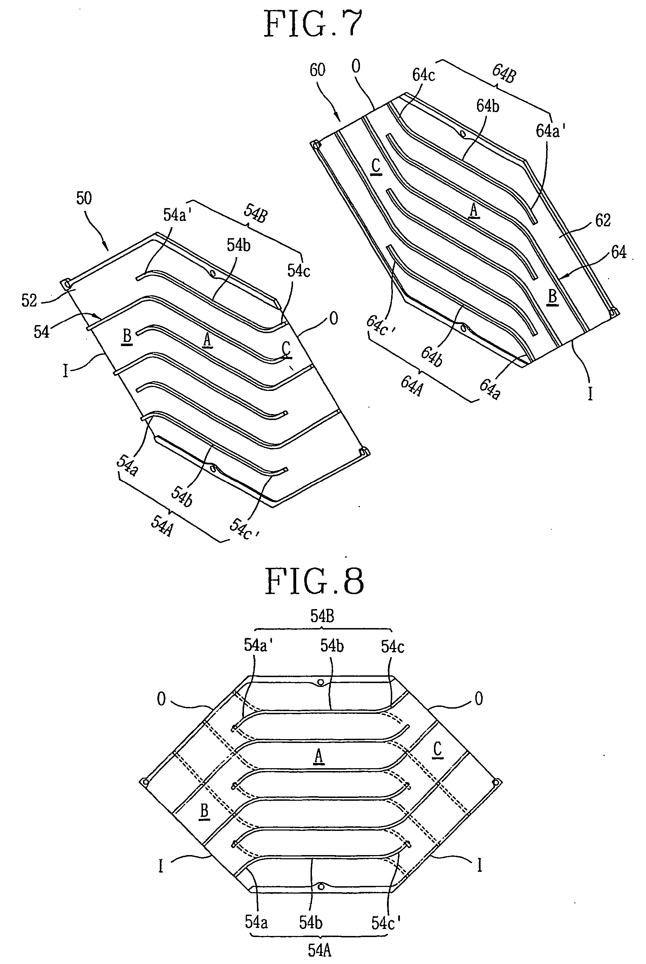

Figs. 7 and 8 are a perspective view illustrating a heat exchanger for a ventilator and a view illustrating air flowing in the heat exchanger for the ventilator in accordance with a second embodiment of the present invention.

As illustrated in Figs. 7 and 8, the heat exchanger for the ventilator of the second embodiment is extremely similar to the heat exchanger for the ventilator of the first embodiment. The first guide ribs 54A and 64A further include discharge guide units 54c' and 64c' formed at the ends of the center units 54b and 64b for guiding outdoor air or indoor air discharge directions, and the second guide ribs 54B and 64B further include suction guide units 54a' and 64a' formed at the ends of the center units 54b and 64b for guiding outdoor air or indoor air suction directions.

Here, the discharge guide u nits 54c' and 64c' have t heir one s ide ends connected smoothly to the ends of the center units 54b and 64b, and their other side ends not connected to the outlets O of the heat exchange films 52 and 63, and the suction guide units 54a' and 64a' have their one side ends connected smoothly to the ends of the center units 54b and 64b, and their other side ends not connected to the inlets I of the heat exchange films 52 and 63.

Accordingly, the first guide ribs 54A and 64A are comprised of the suction units 54a and 64a, the center units 54b and 64b and the discharge guide units 54c' and 64c', and thus the discharge guide units 54c' and 64c' guide outdoor air or indoor air passing through the facing passages A for most actively performing the heat exchange operation to be rapidly discharged. In addition, the second guide ribs 54B and 64B are comprised of the suction guide units 54a' and 64a', the center units 54b and 64b and the discharge units 54c and 64c, and thus the suction guide units 54a' and 64a' guide outdoor air or indoor air to be evenly sucked to the facing passages A for most actively performing the heat exchange operation.

Because the first and second guide ribs 54A, 54B, 64A and 64B are partially omitted in the suction crossing passages B and the discharge crossing passages C, flow resistances are reduced to lower load of the air blowing fan for blowing outdoor air or indoor air and improve air flow. Furthermore, the first and second guide ribs 54A, 54B, 64A and 64B are densely installed in the facing passages A. As a result, outdoor air or indoor air is evenly spread in an area where the heat exchange operation is most actively performed, and heat exchange efficiency is improved by increasing the flowing time.

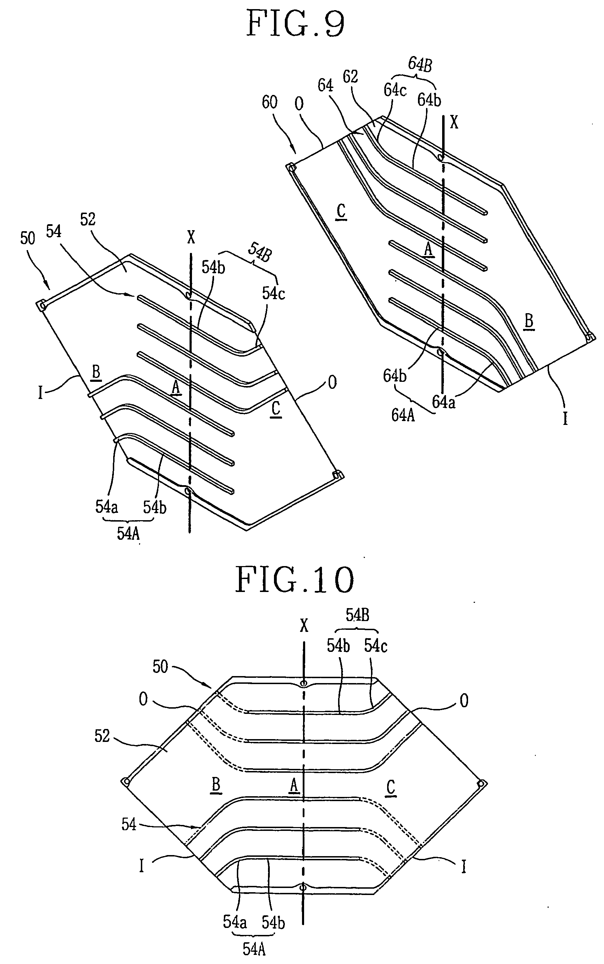

Figs. 9 and 10 are a perspective view illustrating a heat exchanger for a ventilator and a view illustrating air flowing in the heat exchanger for the ventilator in accordance with a third embodiment of the present invention.

As shown in Figs. 9 and 10, the heat exchanger for the ventilator of the third embodiment is extremely similar to the heat exchanger for the ventilator of the first embodiment. The plurality of first guide ribs 54A and 64A are installed at regular intervals in the vertical center lines X of the heat exchange films 52 and 62 in an area where the suction crossing passages B are shorter than the discharge crossing passages C, and the plurality of second guide ribs 54B and 64B are installed at regular intervals in the vertical center lines X of the heat exchange films 52 and 62 in an area where the discharge crossing passages C are shorter than the suction crossing passages B.

The first and second guide ribs 54A, 54B, 64A and 64B can be alternately installed in the centers of the heat exchange films 52 and 62.

Accordingly, outdoor air or indoor air is guided by the suction units 54a and 64a and evenly sucked to the center units 54b and 64b, by installing the first guide ribs 54A and 64A having the suction units 54a and 64a in the area where the suction crossing passages B are relatively short, and outdoor air or indoor air is guided by the discharge units 54c and 64c and rapidly discharged, by installing the second guide ribs 54B and 64B having the discharge units 54c and 64c in the area where the discharge crossing passages C are relatively short, to increase air flow through the heat exchanger and improve heat exchange efficiency.

Moreover, the first and second guide ribs 54A, 54B, 64A and 64B are partially omitted in the suction crossing passages B and the discharge crossing passages C, and thus flow resistances are reduced to lower load of the air blowing fan for blowing outdoor air or indoor air and improve air flow. Because the first and second guide ribs 54A, 54B, 64A and 64B are densely installed in the facing passages A, outdoor air or indoor air is evenly spread in the area where the heat exchange operation is most actively performed, and heat exchange efficiency is improved by increasing the flowing time.

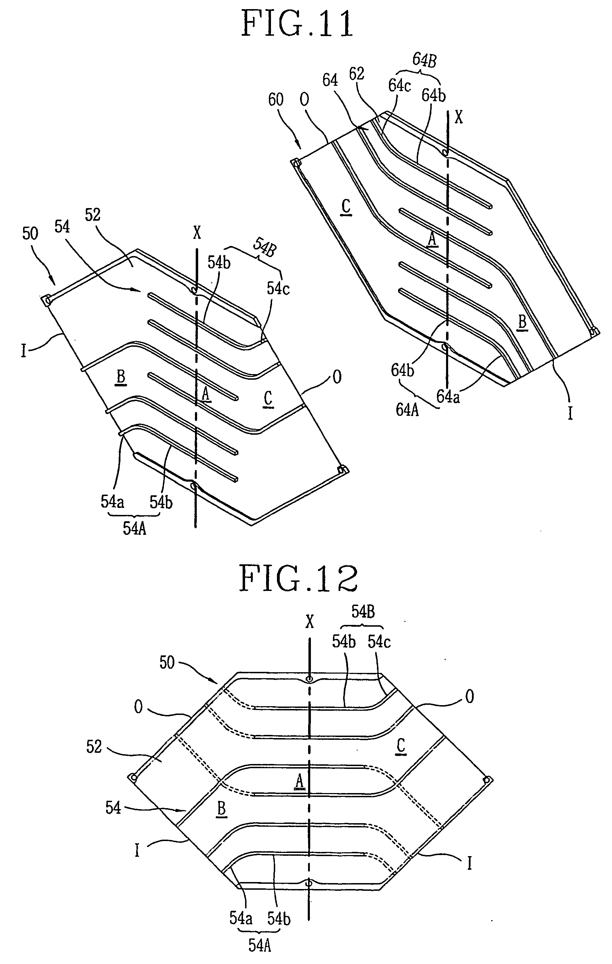

Figs. 11 and 12 are a perspective view illustrating a heat exchanger for a ventilator and a view illustrating air flowing in the heat exchanger for the ventilator in accordance with a fourth embodiment of the present invention.

Referring to Figs. 11 and 12, the heat exchanger for the ventilator of the fourth embodiment is almost identical to the heat exchanger for the ventilator of the third embodiment. The plurality of first guide ribs 54A and 64A a re installed at regular intervals in the vertical center lines X of the heat exchange films 52 and 62 in an area where the suction crossing passages B are shorter than the discharge crossing passages C, and the plurality of second guide ribs 54B and 64B are installed at regular intervals in the vertical center lines X of the heat exchange films 52 and 62 in an area where the discharge crossing passages C are shorter than the suction crossing passages B. In the centers of the heat exchange films 52 and 62, the first guide ribs 54A and 64A are installed in an area where the discharge crossing passages C are shorter than the suction crossing passages B, and the second guide ribs 54B and 64B are installed in an area where the suction crossing passages B are shorter than the discharge crossing passages C.

Here, only the first guide ribs 54A and 64A are installed in the area where the suction crossing passages B are shorter than the discharge crossing passages C, and thus flowing of air discharged from the facing passages A is not guided, and only the second guide ribs 54B and 64B are installed in the area where the discharge crossing passages C are shorter than the suction crossing passages B, and thus flowing of air sucked to the facing passages A is not guided. In order to solve the foregoing problems, the first and second guide ribs 54A, 54B, 64A and 64B are formed oppositely in the centers of the heat exchange films 52 and 62 showing the highest air flow.

That is, in the centers of the heat exchange-films 52 and 62, the second guide ribs 54B and 64B are installed in the area where the suction crossing passages B are shorter than the discharge crossing passages C, so that air passing through the facing passages A can be guided by the discharge units 54c and 64c, and the first guide ribs 54A and 64A are installed in the area where the discharge crossing passages C are shorter than the suction crossing passages B, so that air sucked to the facing passages A can be guided by the suction units 54a and 64a. As a result, outdoor air or indoor air can smoothly flow in the high air blowing area.

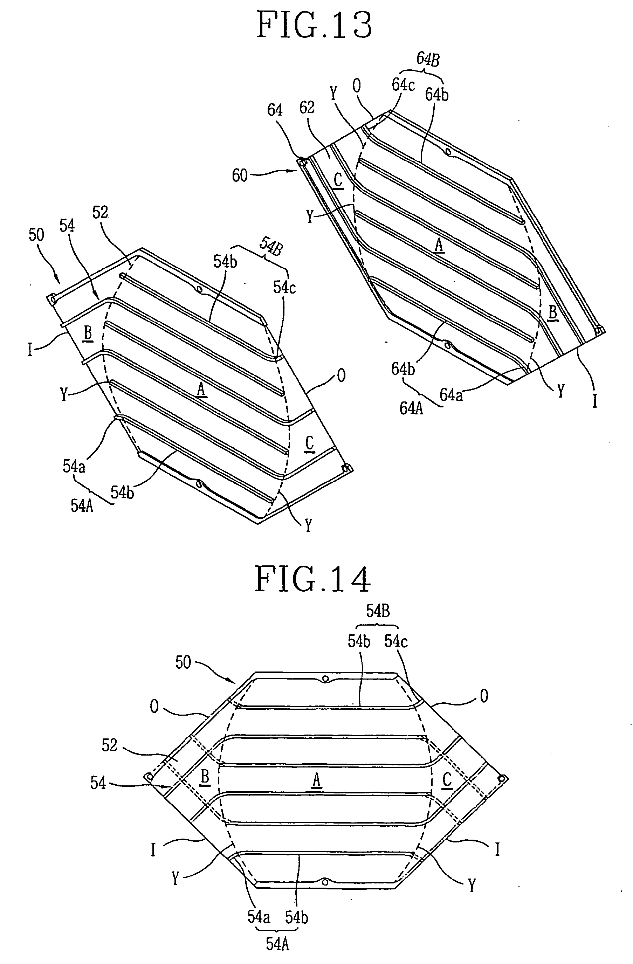

Figs. 13 and 14 are a perspective view illustrating a heat exchanger for a ventilator and a view illustrating air flowing in the heat exchanger for the ventilator in accordance with a fifth embodiment of the present invention.

As illustrated in Figs. 13 and 14, the heat exchanger for the ventilator of the fifth embodiment is extremely similar to the heat exchanger for the ventilator of the first embodiment. In order to improve heat exchange efficiency, the center units 54b and 64b of the first and second guide ribs 54A, 54B, 64A and 64B forming the facing passages A for actively performing the heat exchange operation are more lengthened in the centers of the heat exchange films 52 and 62.

Here, the center units 54b and 64b of the first and second guide ribs 54A, 54B, 64A and 64B are gradually lengthened toward the centers of the heat exchange films 52 and 62. Assumed curved lines Y connecting the ends of the center units 54b and 64b have a predetermined radius of curvature, and the radius of curvature is determined according to the size of the heat exchange films 52 and 62 and the guide ribs 54A, 54B, 64A and 64B.

Because the first and second guide ribs 54A, 54B, 64A and 64B are not installed to completely cross the heat exchange films 52 and 62 from-one side ends to the other side ends, flow resistances are reduced to improve air flow. In addition, the center units 54b and 64b of the first and second guide ribs 54A, 54B, 64A and 64B are lengthened in the centers of the heat exchange films 52 and 62 where the heat exchange operation is most actively performed, to improve heat exchange efficiency.

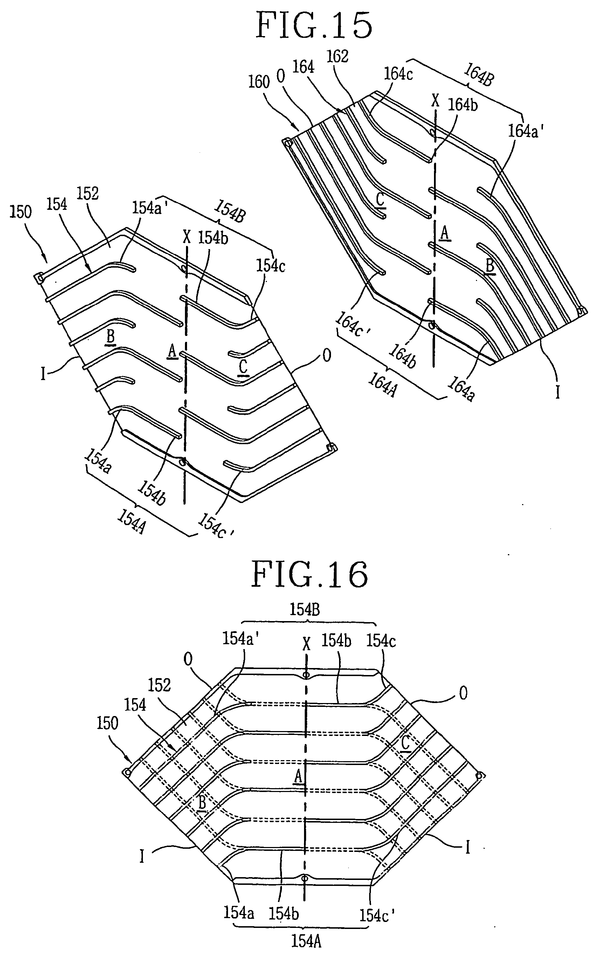

Figs. 15 and 16 are a perspective view illustrating a heat exchanger for a ventilator and a view illustrating air flowing in the heat exchanger for the ventilator in accordance with a sixth embodiment of the present invention.

As depicted in Figs. 15 and 16, the heat exchanger for the ventilator of the sixth embodiment is almost identical to the heat exchanger for the ventilator of the first embodiment. The heat exchanger for the ventilator is comprised of a first heat exchange unit 150 for guiding flowing of outdoor air, and a second heat exchange unit 160 for guiding flowing of indoor air. The first and second heat exchange units 150 and 160 are stacked to form facing passages A for flowing outdoor air and indoor air in facing directions, and crossing passages B and C for flowing outdoor air and indoor air in crossing directions. The crossing passages B and C are divided into suction crossing passages B forming an outdoor air suction area in the first heat exchange unit 150 and an indoor air suction area in the second heat exchange unit 160, and discharge crossing passages C forming an outdoor air discharge area in the first heat exchange unit 150 and an indoor air discharge area in the second heat exchange unit 160.

The first and second heat exchange units 150 and 160 are stacked so that an inlet I and an outlet O of the first heat exchange unit 150 for sucking/discharging outdoor air cannot overlap with an inlet I and an outlet O of the second heat exchange unit 160 for sucking/discharging indoor air.

In the first and second heat exchange units 150 and 160, a plurality of curved guide ribs 154 and 164 are formed on one side surfaces of hexagonal heat exchange films 152 and 162. The plurality of guide ribs 154 and 164 are formed to cross the heat exchange films 152 and 162 from one side ends to the other side ends. Center units 154b and 164b of the guide ribs 154 and 164 forming the facing passages A are partially omitted to reduce flow resistances.

In detail, the plurality of guide ribs 154 and 164 include first guide ribs 154A and 164A having suction units 154a and 164a forming the suction crossing passages B and center units 154b and 164b forming the facing passages A, and second guide ribs 154B and 164B having center units 154b and 164b forming the facing passages A and discharge units 154c and 164c forming the discharge crossing passages C. The center units 154b and 164b of the first and second guide ribs 154A, 154B, 164A and 164B are partially omitted.

The first guide ribs 154A and 164A further include discharge guide units 154c' and 164c' for guiding discharging of outdoor air or indoor air to the discharge crossing passages C. The discharge guide units 154c' and 164c' have their one side ends positioned on the extended lines of the center units 154b and 164b of the first guide ribs 154A and 164A, and their other side ends positioned at the ends of the outlet O sides of the heat exchange films 152 and 162.

The second guide ribs 154B and 164B further include suction guide units 154a' and 164a' for guiding suction of outdoor air or indoor air to the suction crossing passages B. The suction guide units 154a' and 164a' have their one side ends positioned on the extended lines of the center units 154b and 164b of the second guide ribs 154B and 164B, and their other side ends positioned at the ends of the inlet I sides of the heat exchange films 152 and 162.

The first and second guide ribs 154A, 154B, 164A and 164B are formed at regular intervals in the vertical center lines X of the heat exchange films 152 and 162. One or more first and second guide ribs 154A, 154B, 164A and 164B can be alternately formed.

Here, the center units 154b and 164b of the first guide ribs 154A and 164A are formed not to overlap with the center units 154b and 164b of the second guide ribs 154B and 164B.

The first and second heat exchange units 150 and 160 are stacked so that the center unit 154b of the first heat exchange unit 150 and the center unit 164b of the second heat exchange unit 160 can be positioned on the same straight line, the suction unit 154a and the suction guide unit 154a' of the first heat exchange unit 150 can cross the discharge unit 164c and the discharge guide unit 164c' of the second heat exchange unit 160, and the discharge unit 154c and the discharge guide unit 154c' of the first heat exchange unit 150 can cross the suction unit 164a and the suction guide unit 164a' of the second heat exchange unit 160.

Because the first and second guide ribs 154A, 154B, 164A and 164B are partially omitted in the suction crossing passages B, the discharge crossing passages C and the facing passages A, flow resistances are reduced to lower load of the air blowing fan for blowing outdoor air or indoor air and improve air flow. Furthermore, the first and second guide ribs 154A, 154B, 164A and 164B are partially omitted in the facing passages A. Accordingly, outdoor air or indoor air more contacts the area where the heat exchange operation is most actively performed, to improve heat exchange efficiency.

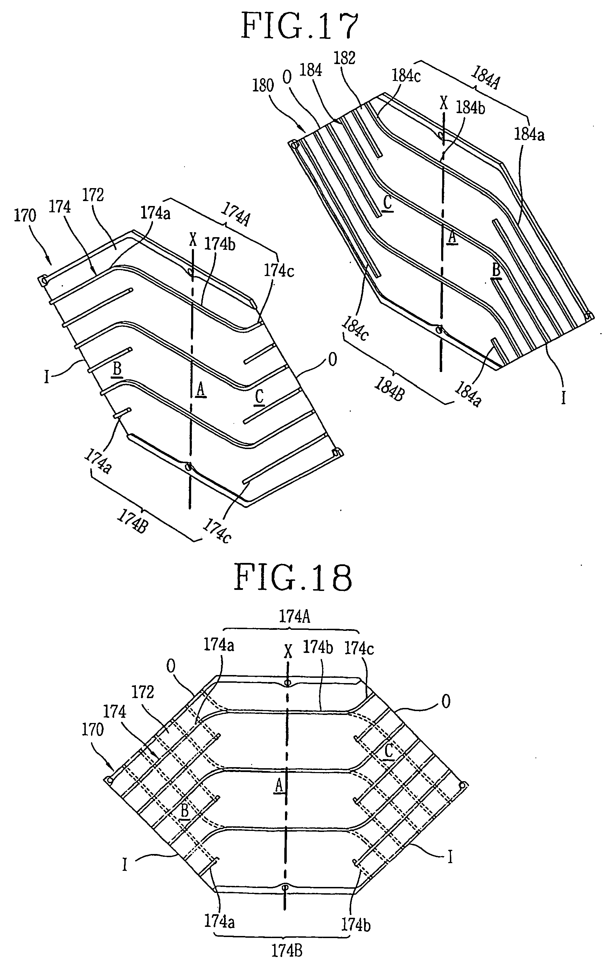

Figs. 17 and 18 are a perspective view illustrating a heat exchanger for a ventilator and a view illustrating air flowing in the heat exchanger for the ventilator in accordance with a seventh embodiment of the present invention.

Referring to Figs. 17 and 18, the heat exchanger for the ventilator includes a first heat exchange unit 170 for guiding flowing of outdoor air and a second heat exchange unit 180 for guiding flowing of indoor air. In the first and second heat exchange units 170 and 180, a plurality of guide ribs 174 and 184 having main guide ribs 174A and 184A and auxiliary guide ribs 174B and 184B are formed on one side surfaces of heat exchange films 172 and 182. The first and second heat exchange units 170 and 180 are stacked to form facing passages A for flowing outdoor air and indoor air in facing directions, and crossing passages B and C for flowing outdoor air and indoor air in crossing directions. The crossing passages B and C are divided into suction crossing passages B forming an outdoor air suction area in the first heat exchange unit 170 and an indoor air suction area in the second heat exchange unit 180, and discharge crossing passages C forming an outdoor air discharge area in the first heat exchange unit 170 and an indoor air discharge area in the second heat exchange unit 180.

The first and second heat exchange units 170 and 180 are stacked so that an inlet I and an outlet O of the first heat exchange unit 170 for sucking/discharging outdoor air cannot overlap with an inlet I and an outlet O of the second heat exchange unit 180 for sucking/discharging indoor air.

In the first and second heat exchange units 170 and 180, a plurality of curved guide ribs 174A, 174B, 184A and 184B are formed on one side surfaces of the hexagonal heat exchange films 172 and 182. The plurality of guide ribs 174A, 174B, 184A and 184B are comprised of the main guide ribs 174A and 184A including suction units 174a and 184a, center units 174b and 184b and discharge units 174c and 184c which respectively form the suction crossing passages B, the facing passages A and the discharge crossing passages C, and auxiliary guide ribs 174B and 184B including suction units 174a and 184a and discharge units 174c and 184c which respectively form the suction crossing passages B and the discharge crossing_passages C.

In detail, the center units 174b and 184b of the main guide ribs 174A and 184A are level with one side facing ends of the heat exchange films 172 and 182, and the suction and discharge units 174a, 174c, 184a and 184c of the main guide ribs 174A and 184A and the suction and discharge units 174a, 174c, 184a and 184c of the auxiliary guide ribs 174B and 184B are level with the other side ends of the heat exchange films 172 and 182. The suction and discharge units 174a, 174c, 184a and 184c of the main guide ribs 174A and 184A and the suction and discharge units 174a, 174c, 184a and 184c of the auxiliary guide ribs 174B and 184B have the same outdoor or indoor air suction and discharge directions.

Moreover, the suction units 174a and 184a, the center units 174b and 184b and the discharge units 174c and 184c of the main guide ribs 174A and 184A are connected smoothly to reduce flow resistances when the outdoor air or indoor air flow directions are changed, and the suction units 174a and 184a and the discharge units 174c and 184c of the auxiliary guide ribs 174B and 184B are formed in the straight line shape.

One or more main guide ribs 174A and 184A and auxiliary guide ribs 174B and 184B are alternately formed on the heat exchange films 172 and 182 in the vertical center lines X at regular intervals, and the first and second heat exchange units 170 and 180 are stacked so that the center units 174b and 184b of the main guide ribs 174A and 184A can overlap with each other.

The operation of the heat exchanger for the ventilator in accordance with the seventh embodiment will now be explained. Outdoor air flows along the first heat exchange unit 170, indoor air flows along the second heat exchange unit 180, and the heat exchange operation is performed in the suction crossing passages B, the facing passages A and the discharge crossing passages C.

In the suction crossing passages B and the discharge crossing passages C, outdoor air and indoor air flow in the crossing directions to exchange heat, and in the facing passages A, outdoor air and indoor air flow in the facing directions to exchange heat. Especially, the heat exchange operation is actively executed in the facing passages A having a high relative flowing speed between outdoor air and indoor air.

Here, the suction and discharge units 174a, 174c, 184a and 184c of the main guide ribs 174A and 184A and the suction and discharge units 174a, 174c, 184a and 184c of the auxiliary guide ribs 174B and 184B are densely formed in the suction crossing passages B and the discharge crossing passages C, and thus outdoor air or indoor air is evenly sucked to the facing passages A over the heat exchange films 172 and 182, to improve heat exchange efficiency.

In addition, the center units 174b and 184b of the main guide ribs 174A and 184A are more thinly formed in the facing passages A than the suction units 174a and 184a and the discharge units 174c and 184c. Therefore, flow resistances are reduced to lower flowing loss of outdoor air or indoor air and load of the air blowing fan for blowing outdoor air or indoor air. Furthermore, a contact area between outdoor air passing through the first heat exchange unit 170 and indoor air passing through the second heat exchange unit 180 increases, which results in high heat exchange efficiency.

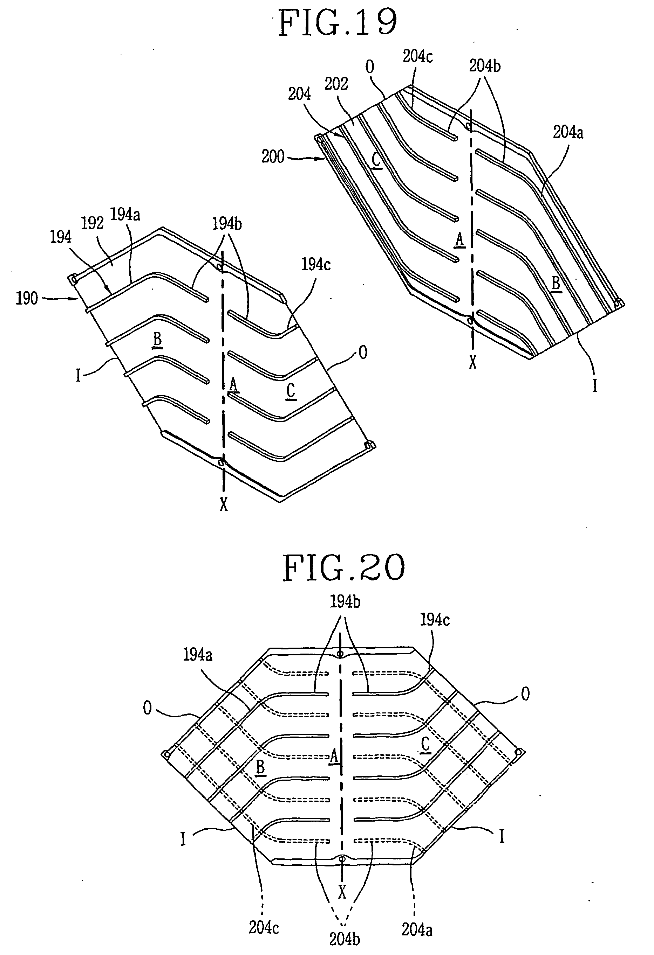

Figs. 19 and 20 are a perspective view illustrating a heat exchanger for a ventilator and a view illustrating air flowing in the heat exchanger for the ventilator in accordance with an eighth embodiment of the present invention.

As shown in Figs. 19 and 20, the heat exchanger for the ventilator includes a first heat exchange unit 190 for guiding flowing of outdoor air and a second heat exchange unit 200 for guiding flowing of indoor air. The first and second heat exchange units 190 and 200 are stacked to form facing passages A for flowing outdoor air and indoor air in facing directions and crossing passages B and C for flowing outdoor air and indoor air in crossing directions. In the first and second heat exchange units 190 and 200, a plurality of guide ribs 194 and 204 are formed on one side surfaces of heat exchange films 192 and 202. Center units 194b and 204b of the guide ribs 194 and 204 forming the facing passages A are partially omitted.

In detail, the heat exchange films 192 and 202 are formed in the hexagonal shape, and the guide ribs 194 and 204 are curved to include suction units 194a and 204a, center units 194b and 204b and discharge units 194c and 204c according to the guiding roles of outdoor air or indoor air. The center units 194b and 204b are level with one side facing ends of the heat exchange films 192 and 202, and the suction units 194a and 204a and the discharge units 194c and 204c are level with the other side facing ends of the heat exchange films 192 and 202. The suction units 194a and 204a and the discharge units 194c and 204c are formed to have the same outdoor air or indoor air suction and discharge directions.

Here, the suction units 194a and 204a, the center units 194b and 204b and the discharge units 194c and 204c of the guide ribs 194 and 204 are connected smoothly to reduce flow resistances when the outdoor air or indoor air flow directions are changed, and the center units 194b and 204b are lengthened toward the centers of the heat exchange films 192 and 202 to improve heat exchange efficiency.

The guide ribs 194 and 204 are formed on the heat exchange films 192 and 202 in the vertical center lines X at regular intervals, and the first and second heat exchange units 1 90 and 2 00 are installed to position the guide ribs 204 of the second heat exchange unit 200 between the guide ribs 194 of the first heat exchange unit 190, so that the guide ribs 194 and 204 cannot overlap with each other.

The first and second heat exchange units 190 and 200 are stacked so that an inlet I and an outlet O of the first heat exchange unit 190 for sucking/discharging outdoor air cannot overlap with an inlet I and an outlet O of the second heat exchange unit 200 for sucking/discharging indoor air.

On the other hand, the heat exchange units 190 and 200 are manufactured by alternately forming the guide ribs 194 and 204 whose center units 194b and 204b have been partially omitted on both surfaces of the heat exchange films 192 and 202, to prevent the heat exchange films 192 and 202 from getting twisted. Moreover, special heat exchange films can be stacked between the heat exchange units 190 and 200, which simplifies the manufacturing process.

## Claims

1. A heat exchanger (10) for a ventilator comprising
- first and second heat exchange units (50, 150; 60, 160) having a plurality of guide ribs (54, 154; 64, 164) on one side surfaces of hexagonal shaped heat exchange films (52, 152; 62, 162), for separately flowing supplied air and exhausted air,
- the first and second heat exchange units (50, 150; 60, 160) being stacked to form crossing passages (B, C) at their both ends and facing passages (A) between the crossing passages (B, C), for exchanging heat between supplied air and exhausted air,
- the guide ribs (54, 154; 64, 164) being provided with center units (54b, 154b; 64b, 164b) forming the facing passages (A), wherein the center units (54b, 154b; 64b, 164b) are parallel with one side facing ends of the heat exchange films (52, 152; 62, 162),
- the guide ribs (54, 154; 64, 164) being provided with suction units (54a, 154a; 64a, 164a) and discharge units (54c, 154c; 64c, 164c), wherein the suction units (54a, 154a; 64a, 164a) and discharge units (54c, 154c; 64c, 164c) of the guide ribs (54, 154; 64, 164) are parallel with the other side facing ends of the heat exchange films (52, 152; 62, 162), and compose the suction crossing passages (B) for sucking supplied air and the discharge crossing passages (C) for discharging exhausted air, respectively,
- the guide ribs (54, 154; 64, 164) crossing the heat exchange films (52, 152; 62, 162) from one side end to the other side end being partially omitted in each of the first and second heat exchange units (50, 150; 60, 160),
**characterized in that**
the plurality of guide ribs (54, 154; 64, 164) comprise first guide ribs (54A, 154A; 64A, 164A) having suction units (54a, 154a; 64a, 164a) and center units (54b, 154b; 64b, 164b) only,
and second guide ribs (54B, 154B; 64B, 164B) having center units (54b, 154b; 64b, 164b) and discharge units (54c, 154c; 64c, 164c) only.

2. The heat exchanger (10) of claim 1, wherein the center units (154b; 164b) of the first and second guide ribs (154A, 154B; 164A, 164B) are partially omitted.

3. The heat exchanger (10) of claim 2, wherein the center units (154b; 164b) of the first guide ribs (154A; 164A) and the center units (154b; 164b) of the second guide (154B; 164B) ribs do not overlap with each other.

4. The heat exchanger (10) of claim 2, wherein the first guide ribs (154A, 164A) further comprise discharge guide units (154c'; 164c') installed on the extended lines of the center units (154b; 164b) for guiding discharging of supplied air or exhausted air to the ends of the heat exchange films (152; 162).

5. The heat exchanger (10) of claim 4, wherein the discharge guide units (154c'; 164c') are partially omitted in length.

6. The heat exchanger (10) of claim 2, wherein the second guide ribs further (154B; 164B) comprise suction guide units (154a'; 164a') installed on the extended lines of the center units (154b, 164b) for guiding suction of supplied air or exhausted air to the ends of the heat exchange films (152; 162).

7. The heat exchanger (10) of claim 6, wherein the suction guide units (154a'; 164a') are partially omitted in length.

8. The heat exchanger (10) of claim 1, wherein the suction units (54a; 64a) and center units (54b; 64b) of the first guide ribs (54A ; 64A) are smoothly connected.

9. The heat exchanger (10) of claim 1, wherein the center units (54b; 64b) and discharge units (54c; 64c) of the second guide ribs (54B; 64B) are smoothly connected.

10. The heat exchanger (10) of claim 1, wherein the center units (54b; 64b) of the first and second guide ribs (54A, 54B; 64A, 64B) are lengthened in the centers of the heat exchange films (52; 62).

11. The heat exchanger (10) of claim 10, wherein the center units (54b; 64b) of the first and second guide ribs (54A, 54B; 64A, 64B) are gradually lengthened toward the centers of the heat exchange films (52; 62).

12. The heat exchanger (10) of claim 11, wherein assumed curved lines connecting the ends of the center units (54b; 64b) of the first and second guide ribs (54A, 548; 64A, 64B) have a predetermined radius of curvature.

13. The heat exchanger (10) of one of claims 1 to 12, wherein at least one first guide rib (54A; 64A) and at least one second guide rib (54B; 64B) are alternately installed on the heat exchange films (52; 62) in one direction at regular intervals.

14. The heat exchanger (10) of one of claims 1 to 13, wherein a plurality of first guide ribs (54A; 64A) are installed in one direction at regular intervals in an area where the suction crossing passages (B) are shorter than the discharge crossing passages (C), and a plurality of second guide ribs (54B; 64B) are installed in one direction at regular intervals in an area where the discharge crossing (C) passages are shorter than the suction crossing (B) passages.

15. The heat exchanger (10) of claim 14, wherein, in the centers of the heat exchange films (52; 62), the first guide ribs (54A; 64A) are installed in an area where the discharge crossing passages (C) are shorter than the suction crossing passages (B), and the second guide ribs (54B; 64B) are installed in an area where the suction crossing (B) passages are shorter than the discharge crossing passages (C).

16. A heat exchanger (10) for a ventilator comprising
- first and second heat exchange units (170; 180) having a plurality of guide ribs (174; 184) on one side surfaces of hexagonal shaped heat exchange films (172; 182), for separately flowing supplied air and exhausted air,
- the first and second heat exchange units (170; 180) being stacked to form crossing passages (B, C) at their both ends and facing passages (A) between the crossing passages (B, C), for exchanging heat between supplied air and exhausted air,
- the guide ribs (174; 184) being provided with center units (174b; 184b) forming the facing passages (A), wherein the center units (174b; 184b) are parallel with one side facing ends of the heat exchange films (172; 182),
- the guide ribs (174; 184) being provided with suction units (174a; 184a) and discharge units (174c; 184c), wherein the suction units (174a; 184a) and discharge units (174c; 184c) of the guide ribs (174; 184) are parallel with the other side facing ends of the heat exchange films (172; 182) and compose the suction crossing passages (B) for sucking supplied air and the discharge crossing passages (C) for discharging exhausted air, respectively,
- the guide ribs (174; 184) crossing the heat exchange films (172; 182) from one side end to the other side end being partially omitted in each of the first and second heat exchange units (170; 180),
**characterized in that**
the plurality of guide ribs comprise main guide ribs (174A; 184A) having suction units (174a; 184a), center units (174b; 184b) and discharge units (174c; 184c), and auxiliary guide ribs (174B; 184B) having suction units (174a; 184a) and discharge units (174c; 184c) only.

17. The heat exchanger (10) of claim 16, wherein the center units (174b; 184b) of the main guide ribs (174A; 184A) are partially omitted in length.

18. The heat exchanger (10) of claim 16, wherein, in the main guide ribs (174A; 184A), the suction units (174a; 184a) and center units (174b; 184b) and the center units (174b; 184b) and discharge units (174c; 184c) are smoothly connected.

19. The heat exchanger (10) of one of claims 16 to 18, wherein at least one main guide rib (174A; 184A) and at least one auxiliary guide rib (1748; 184B) are alternately installed on the heat exchange films (172, 182) in one direction at regular intervals.

20. The heat exchanger (10) of one of claims 16 to 18, wherein the first and second heat exchange units (170; 180) are stacked so that the main guide ribs (174A) of the first heat exchange unit (170) and the main guide ribs (184A) of the second heat exchange unit (180) cannot overlap with each other:

## Patentansprüche

1. Wärmetauscher (10) für einen Ventilator mit
- ersten und zweiten Wärmeaustauscheinheiten (50, 150; 60, 160) mit einer Mehrzahl an Leitrippen (54, 154; 64, 164) auf einer seitlichen Oberfläche der hexagonal geformten Wärmeaustauschfilme (52, 152; 62, 162) zum getrennten Strömen von zugeführter Luft und ausgetragener Luft, wobei
- die ersten und die zweiten Wärmeaustauscheinheiten (50, 150; 60, 160) gestapelt sind, um kreuzende Durchgänge (B, C) an ihren beiden Enden und gegenüberliegende Durchgänge (A) zwischen den kreuzenden Durchgängen (B, C) zum Austauschen von Wärme zwischen zugeführter Luft und ausgetragener Luft zu bilden, und
- die Leitrippen (54, 154; 64, 164) mit Zentraleinheiten (54b, 154b; 64b, 164b) versehen sind, die die gegenüberliegenden Durchgänge (A) bilden, wobei die Zentraleinheiten (54b, 154b; 64b, 164b) mit einer Seite, die den Enden der Wärmeaustauschfilme (52, 152; 62, 162) gegenüberliegt, parallel sind, und
- die Leitrippen (54, 154; 64, 164) mit Saugeinheiten (54a, 154a; 64a, 164a) und Auslasseinheiten (54c, 154c; 64c, 164c) versehen sind, wobei die Saugeinheiten (54a, 154a; 64a, 164a) und die Auslasseinheiten (54c, 154c; 64c, 164c) der Leitrippen (54, 154; 64, 164) mit der anderen Seite, die den Enden der Wärmeaustauschfilme (52, 152; 62, 162) gegenüberliegt, parallel sind, und die kreuzenden Saugdurchgänge (B) zum Ansaugen zugeführter Luft und die kreuzenden Auslassdurchgänge (C) zum Entweichen ausgetragener Luft bilden, und
- die Leitrippen (54, 154; 64, 164), die die Wärmeaustauschfilme (52, 152; 62, 162) von einem seitlichen Ende zu dem anderen seitlichen Ende kreuzen, teilweise in jeder der ersten und der zweiten Wärmeaustauscheinheiten (50, 150; 60, 160) ausgespart sind,
**dadurch gekennzeichnet,**
**dass** die Mehrzahl an Leitrippen (54, 154; 64, 164) erste Leitrippen (54A, 154A; 64A, 164A) mit lediglich Saugeinheiten (54a, 154a; 64a, 164a) und Zentraleinheiten (54b, 154b; 64b, 164b)
und zweite Leitrippen (54B, 154B; 64B, 164B) mit lediglich Zentraleinheiten (54b, 154b; 64b, 164b) und Auslasseinheiten (54c, 154c; 64c, 164c) aufweist.

2. Wärmetauscher (10) nach Anspruch 1, wobei die Zentraleinheiten (154b; 164b) der ersten und der zweiten Leitrippen (154A, 154B; 164A, 164B) teilweise ausgespart sind.

3. Wärmetauscher (10) nach Anspruch 2, wobei die Zentraleinheiten (154b; 164b) der ersten Leitrippen (154A; 164A) und die Zentraleinheiten (154b; 164b) der zweiten Leitrippen (154B; 164B) nicht miteinander überlappen.

4. Wärmetauscher (10) nach Anspruch 2, wobei die ersten Leitrippen (154A; 164B) ferner Auslassleiteinheiten (154c'; 164c') aufweisen, die auf den verlängerten Linien der Zentraleinheiten (154b; 164b) zum Leiten des Austrags von zugeführter Luft oder von ausgetragener Luft zu den Enden der Wärmeaustauschfilme (152; 162) eingebaut sind.

5. Wärmetauscher (10) nach Anspruch 4, wobei die Auslassleiteinheiten (154c'; 164c') in der Länge teilweise ausgespart sind.

6. Wärmetauscher (10) nach Anspruch 2, wobei die zweiten Leitrippen (154B; 164B) ferner Saugleiteinheiten (154a'; 164a') aufweisen, die auf den verlängerten Linien der Zentraleinheiten (154b; 164b) zum Leiten des Ansaugens von zugeführter Luft oder von ausgetragener Luft zu den Enden der Wärmeaustauschfilme (152; 162) eingebaut sind.

7. Wärmetauscher (10) nach Anspruch 6, wobei die Saugleiteinheiten (154a'; 164a') in der Länge teilweise ausgespart sind.

8. Wärmetauscher (10) nach Anspruch 1, wobei die Saugeinheiten (54a; 64a) und die Zentraleinheiten (54b; 64b) der ersten Leitrippen (54A; 64A) nahtlos verbunden sind.

9. Wärmetauscher (10) nach Anspruch 1, wobei die Zentraleinheiten (54b; 64b) und die Auslasseinheiten (54c; 64c) der zweiten Leitrippen (54B; 64B) nahtlos verbunden sind.

10. Wärmetauscher (10) nach Anspruch 1, wobei die Zentraleinheiten (54b; 64b) der ersten und der zweiten Leitrippen (54A, 54B; 64A, 64B) in den Zentren der Wärmeaustauschfilme (52; 62) verlängert sind.

11. Wärmetauscher (10) nach Anspruch 10, wobei die Zentraleinheiten (54b; 64b) der ersten und der zweiten Leitrippen (54A, 54B; 64A, 64B) stufenlos in Richtung der Zentren der Wärmeaustauschfilme (52; 62) verlängert sind.

12. Wärmetauscher (10) nach Anspruch 11, wobei angenommene gekrümmte Linien, die die Enden der Zentraleinheiten (54b; 64b) der ersten und der zweiten Leitrippen (54A, 54B; 64A, 64B) verbinden, einen vorbestimmten Krümmungsradius aufweisen.

13. Wärmetauscher (10) nach einem der Ansprüche 1 bis 12, wobei zumindest eine Leitrippe (54A; 64A) und zumindest eine zweite Leitrippe (54B; 64B) auf den Wärmeaustauschfilmen (52; 62) in einer Richtung in regelmäßigen Abständen wechselweise eingebaut sind.

14. Wärmetauscher (10) nach einem der Ansprüche 1 bis 13, wobei eine Mehrzahl von ersten Leitrippen (54A; 64A) in einer Richtung in regelmäßigen Abständen in einem Bereich eingebaut sind, wo die kreuzenden Saugdurchgänge (B) kürzer sind als die kreuzenden Auslassdurchgänge (C), und eine Mehrzahl von zweiten Leitrippen (54B; 64B) in einer Richtung in regelmäßigen Abständen in einem Bereich eingebaut sind, wo die kreuzenden Auslassdurchgänge (C) kürzer sind als die kreuzenden Saugdurchgänge (B).

15. Wärmetauscher (10) nach Anspruch 14, wobei in den Zentren der Wärmeaustauschfilme (52; 62), die ersten Leitrippen (54A; 64A) in einem Bereich eingebaut sind, wo die kreuzenden Auslassöffnungen (C) kürzer sind als die kreuzenden Saugdurchgänge (B), und die zweiten Leitrippen (54B; 64B) in einem Bereich eingebaut sind, wo die kreuzenden Saugdurchgänge (B) kürzer sind als die kreuzenden Auslassdurchgänge (C).

16. Wärmetauscher (10) für einen Ventilator mit
- ersten und zweiten Wärmeaustauscheinheiten (170; 180) mit einer Mehrzahl an Leitrippen (174; 184) auf einer seitlichen Oberfläche der hexagonal geformten Wärmeaustauschfilme (172; 182), zum getrennten Strömen von zugeführter Luft und von ausgetragener Luft, wobei
- die ersten und die zweiten Wärmeaustauscheinheiten (170; 180) gestapelt sind, um kreuzende Durchgänge (B, C) an ihren beiden Enden und gegenüberliegenden Durchgänge (A) zwischen den kreuzenden Durchgängen (B, C) zum Austauschen von Wärme zwischen zugeführter Luft und ausgetragener Luft zu bilden, und
- die Leitrippen (174; 184) mit Zentraleinheiten (174b; 184b) versehen sind, die die gegenüberliegenden Durchgänge (A) bilden, wobei die Zentraleinheiten (174b; 184b) mit einer Seite, die den Enden der Wärmeaustauschfilme (172; 182) gegenüberliegt, parallel sind, und
- die Leitrippen (174; 184) mit Saugeinheiten (174a; 184a) und Auslasseinheiten (174c; 184c) versehen sind, wobei die Saugeinheiten (174a; 184a) und die Auslasseinheiten (174c; 184c) der Leitrippen (174; 184) mit der anderen Seite, die den Enden der Wärmeaustauschfilme (172; 182) gegenüberliegt, parallel sind, und die kreuzenden Saugdurchgänge (B) zum Ansaugen zugeführter Luft und die kreuzenden Auslassdurchgänge (C) zum Entweichen ausgetragener Luft bilden, und
- die Leitrippen (174; 184), die die Wärmeaustauschfilme (172; 182) von einem seitlichen Ende zu dem anderen seitlichen Ende kreuzen, teilweise in jeder der ersten und der zweiten Wärmeaustauscheinheiten (170; 180) ausgespart sind,
**dadurch gekennzeichnet,**
**dass** die Mehrzahl an Leitrippen Hauptleitrippen (174A; 184A) mit Saugeinheiten (174a; 184a), Zentraleinheiten (174b; 184b) und Auslasseinheiten (174c; 184c) sowie Hilfsleitrippen (174B; 184B) mit lediglich Saugeinheiten (174a; 184a) und Auslasseinheiten (174c; 184c), aufweisen.

17. Wärmetauscher (10) nach Anspruch 16, wobei die Zentraleinheiten (174b; 184b) der Hauptleitrippen (174A; 184A) in der Länge teilweise ausgespart sind.

18. Wärmetauscher (10) nach Anspruch 16, wobei in den Hauptleitrippen (174A; 184A) die Saugeinheiten (174a; 184a) und die Zentraleinheiten (174b; 184b) und die Auslasseinheiten (174c; 184c) nahtlos verbunden sind.

19. Wärmetauscher (10) nach einem der Ansprüche 16 bis 18, wobei zumindest eine Hauptleitrippe (174A; 184A) und zumindest eine Hilfsleitrippe (174B; 184B) wechselweise in einer Richtung in regelmäßigen Abständen auf den Wärmeaustauschfilmen (172; 182) eingebaut sind.

20. Wärmetauscher (10) nach einem der Ansprüche 16 bis 18, wobei die ersten und die zweiten Wärmeaustauscheinheiten (170; 180) so gestapelt sind, dass die Hauptleitrippen (174A) der ersten Wärmeaustauscheinheit (170) und die Hauptleitrippen (184A) der zweiten Wärmeaustauscheinheit (180) nicht miteinander überlappen können.

## Revendications

1. Echangeur de chaleur (10) pour un ventilateur, comprenant :
- une première et une deuxième unités d'échange thermique (50, 150 ; 60, 160) ayant une pluralité de membrures de guidage (54, 154 ; 64, 164) sur des surfaces sur une face de films d'échange thermique (52, 152 ; 62, 162) de forme hexagonale, pour l'écoulement séparé d'air fourni et d'air évacué,
- la première et la deuxième unités d'échange thermique (50, 150 ; 60, 160) étant superposées de manière à former des passages croisés (B, C) à leurs deux extrémités et des passages en vis-à-vis (A) entre les passages croisés (B, C), pour échanger de la chaleur entre l'air fourni et l'air évacué,
- les membrures de guidage (54, 154 ; 64, 164) étant munies d'unités centrales (54b, 154b ; 64b, 164b) formant les passages en vis-à-vis (A), les unités centrales (54b, 154b ; 64b, 164b) étant parallèles avec des extrémités en vis-à-vis sur une face des films d'échange thermique (52, 152 ; 62, 162),
- les membrures de guidage (54, 154 ; 64, 164) étant munies d'unités d'aspiration (54a, 154a ; 64a, 164a) et d'unités de refoulement (54c, 154c; 64c, 164c), les unités d'aspiration (54a, 154a ; 64a, 164a) et les unités de refoulement (54c, 154c ; 64c, 164c) des membrures de guidage (54, 154 ; 64, 164) étant parallèles aux extrémités en vis-à-vis sur l'autre face des films d'échange thermique (52, 152 ; 62, 162), et composant respectivement les passages croisés d'aspiration (B) pour aspirer l'air fourni et les passages croisés de refoulement (C) pour refouler l'air évacué,
- les membrures de guidage (54, 154 ; 64, 164) croisant les films d'échange thermique (52, 152 ; 62, 162) d'une extrémité d'une face jusqu'à l'extrémité de l'autre face étant partiellement absentes dans chacune des première et deuxième unités d'échange thermique (50, 150 ; 60, 160),
***caractérisé en ce que***
la pluralité de membrures de guidage (54, 154 ; 64, 164) comprend des premières membrures de guidage (54A, 154A ; 64A, 164A) n'ayant que des unités d'aspiration (54a, 154a ; 64a, 164a) et des unités centrales (54b, 154b ; 64b, 164b),
et des deuxièmes membrures de guidage (54B, 154B ; 64B, 164B) n'ayant que des unités centrales (54b, 154b ; 64b, 164b) et des unités de refoulement (54c, 154c; 64c, 164c).

2. Echangeur de chaleur (10) selon la revendication 1, dans lequel les unités centrales (154b ; 164b) des première et deuxième membrures de guidage (154A, 154B; 164A, 164B) sont partiellement absentes.

3. Echangeur de chaleur (10) selon la revendication 2, dans lequel les unités centrales (154b ; 164b) des premières membrures de guidage (154A ; 164A) et les unités centrales (154b ; 164b) des deuxièmes membrures de guidage (154B ; 164B) ne se chevauchent pas entre elles.

4. Echangeur de chaleur (10) selon la revendication 2, dans lequel les premières membrures de guidage (154A, 164A) comprennent en plus des unités (154c' ; 164c') de guidage du refoulement installées sur les lignes allongées des unités centrales (154b ; 164b) pour guider le refoulement d'air fourni ou d'air évacué vers les extrémités des films d'échange thermique (152 ; 162).

5. Echangeur de chaleur (10) selon la revendication 4, dans lequel les unités de guidage du refoulement (154c' ; 164c') sont partiellement absentes dans la longueur.

6. Echangeur de chaleur (10) selon la revendication 2, dans lequel les deuxièmes membrures de guidage (154B ; 164B) comprennent en plus des unités de guidage de l'aspiration (154a' ; 164a') installées sur les lignes allongées des unités centrales (154b, 164b) pour guider l'aspiration d'air fourni ou d'air évacué vers les extrémités des films d'échange thermique (152 ; 162).

7. Echangeur de chaleur (10) selon la revendication 6, dans lequel les unités de guidage de l'aspiration (154a' ; 164a') sont partiellement absentes dans la longueur.

8. Echangeur de chaleur (10) selon la revendication 1, dans lequel les unités d'aspiration (54a ; 64a) et les unités centrales (54b ; 64b) des premières membrures de guidage (54A ; 64A) sont reliées sans aspérités.

9. Echangeur de chaleur (10) selon la revendication 1, dans lequel les unités centrales (54b ; 64b) et les unités de refoulement (54c ; 64c) des deuxièmes membrures de guidage (54B ; 64B) sont reliées sans aspérités.

10. Echangeur de chaleur (10) selon la revendication 1, dans lequel les unités centrales (54b ; 64b) des premières et deuxièmes membrures de guidage (54A, 54B ; 64A, 64B) sont rallongées dans les centres des films d'échange thermique (52 ; 62).

11. Echangeur de chaleur (10) selon la revendication 10, dans lequel les unités centrales (54b ; 64b) des premières et deuxièmes membrures de guidage (54A, 54B ; 64A, 64B) sont progressivement rallongées vers les centres des films d'échange thermique (52 ; 62).

12. Echangeur de chaleur (10) selon la revendication 11, dans lequel des lignes courbes implicites reliant les extrémités des unités centrales (54b ; 64b) des premières et deuxièmes membrures de guidage (54A, 54B ; 64A, 64B) ont un rayon de courbure prédéterminé.

13. Echangeur de chaleur (10) selon l'une des revendications 1 à 12, dans lequel au moins une première membrure de guidage (54A ; 64A) et au moins une deuxième membrure de guidage (54B ; 64B) sont placées en alternance sur les films d'échange thermique (52 ; 62) dans une direction, à intervalles réguliers.

14. Echangeur de chaleur (10) selon l'une des revendications 1 à 13, dans lequel une pluralité de premières membrures de guidage (54A ; 64A) sont placées dans une direction, à intervalles réguliers, dans une zone où les passages croisés d'aspiration (B) sont plus courts que les passages croisés de refoulement (C), et une pluralité de deuxièmes membrures de guidage (54B ; 64B) sont placées dans une direction, à intervalles réguliers, dans une zone où les passages croisés de refoulement (C) sont plus courts que les passages croisés d'aspiration (B).

15. Echangeur de chaleur (10) selon la revendication 14, dans lequel, dans les centres des films d'échange thermique (52 ; 62), les premières membrures de guidage (54A ; 64A) sont placées dans une zone où les passages croisés de refoulement (C) sont plus courts que les passages croisés d'aspiration (B), et les deuxièmes membrures de guidage (54B ; 64B) sont placées dans une zone où les passages croisés d'aspiration (B) sont plus courts que les passages croisés de décharge (C).

16. Echangeur de chaleur (10) pour un ventilateur, comprenant :
- une première et une deuxième unités d'échange thermique (170 ; 180) ayant une pluralité de membrures de guidage (174 ; 184) sur des surfaces sur une face de films d'échange thermique (172 ; 182) de forme hexagonale, pour l'écoulement séparé d'air fourni et d'air évacué,
- la première et la deuxième unités d'échange thermique (170 ; 180) étant superposées de manière à former des passages croisés (B, C) à leurs deux extrémités et des passages en vis-à-vis (A) entre les passages croisés (B, C), pour échanger de la chaleur entre l'air fourni et l'air évacué,
- les membrures de guidage (174 ; 184) étant munies d'unités centrales (174b ; 184b) formant les passages en vis-à-vis (A), les unités centrales (174b; 184b) étant parallèles avec des extrémités en vis-à-vis sur une face des films d'échange thermique (172 ; 182),
- les membrures de guidage (174 ; 184) étant munies d'unités d'aspiration (174a; 184a) et d'unités de refoulement (174c ; 184c), les unités d'aspiration (174a ; 184a) et les unités de refoulement (174c ; 184c) des membrures de guidage (174 ; 184) étant parallèles aux extrémités en vis-à-vis sur l'autre face des films d'échange thermique (172 ; 182), et composant respectivement les passages croisés d'aspiration (B) pour aspirer l'air fourni et les passages croisés de refoulement (C) pour refouler l'air évacué,
- les membrures de guidage (174 ; 184) croisant les films d'échange thermique (172 ;182) d'une extrémité d'une face jusqu'à l'extrémité de l'autre face étant partiellement absentes dans chacune des première et deuxième unités d'échange thermique (170 ; 180),
***caractérisé en ce que***
la pluralité de membrures de guidage comprend des membrures de guidage principales (174A ; 184A) ayant des unités d'aspiration (174a ; 184a), des unités centrales (174b ; 184b) et des unités de refoulement (174c ; 184c), et des membrures de guidage auxiliaires (174B ; 184B) n'ayant que des unités d'aspiration (174a ; 184a) et des unités de refoulement (174c ; 184c).

17. Echangeur de chaleur (10) selon la revendication 16, dans lequel les unités centrales (174b ; 184b) des membrures de guidage principales (174A ; 184A) sont partiellement absentes dans la longueur.

18. Echangeur de chaleur (10) selon la revendication 16, dans lequel, dans les membrures de guidage principales (174A ; 184A), les unités d'aspiration (174a ; 184a) et les unités centrales (174b ; 184b), et les unités centrales (174b ; 184b) et les unités de refoulement (174c; 184c) sont reliées sans aspérités.

19. Echangeur de chaleur (10) selon l'une des revendications 16 à 18, dans lequel au moins une membrure de guidage principale (174A ; 184A) et au moins une membrure de guidage auxiliaire (174B ; 184B) sont installées en alternance sur les films d'échange thermique (172, 182) dans une direction, à intervalles réguliers.

20. Echangeur de chaleur (10) selon l'une des revendications 16 à 18, dans lequel la première et la deuxième unités d'échange thermique (170 ; 180) sont superposées de telle sorte que les membrures de guidage principales (174A) de la première unité d'échange thermique (170) et les membrures de guidage principales (184A) de la deuxième unité d'échange thermique (180) ne puissent pas de chevaucher.
